# EUROPEAN PATENT SPECIFICATION

(11) **EP 0 484 015 B1**
(45) Date of publication and mention of the grant of the patent: **27.09.1995**
(21) Application number: 91309631.9
(22) Date of filing: 18.10.1991
(51) Int. Cl.: B29C 35/08, B29D 11/00, B29C 39/00

(54) **Method for curing ocular devices**
Verfahren zur Vernetzung augenfälliger Gegenstände
Procédé pour la polymèrisation des objets oculaires

(30) Priority: 30.10.1990 US 605919
(43) Date of publication of application: 06.05.1992
(73) Proprietor: MINNESOTA MINING AND MANUFACTURING COMPANY, St. Paul, Minnesota 55133-3427 (US)
(72) Inventor: Fogarty, Terence M., c/o Minnesota Mining and, St. Paul, Minnesota 55133-3427 (US)
(74) Representative: Baillie, Iain Cameron

(56) References cited:
- EP-A- 0 226 123
- EP-A- 0 372 556
- US-A- 4 166 088
- US-A- 4 620 954
- US-A- 4 818 801

## Description

This invention relates to a method for curing an ocular device such as a contact lens, an intraocular lens or a blank which is later lathed to make a lens.

Curable liquid polymer materials are widely used for making ocular devices including contact lenses, intraocular lenses and lens blanks. Conventionally, a quantity of liquid molding material is dispensed into a mold and cured to a sufficient degree to permit subsequent machining and finishing of the materials into a usable lens. The materials used to make ocular devices are typically tenacious and difficult to handle in a liquid condition, and it is normally desirable to cure the material including the flash external of the mold cavity as completely as practicable before attempting removal of the device from the mold.

In the past, curing of ocular devices has been carried out by mixing monomers with an initiator which generates free-radicals on application of an activating energy. For example, thermally activated initiators may be mixed with monomers for curing the latter at a selected time upon application of heat. As an alternative, a photoinitiator may be mixed with monomers to enable the monomers to polymerise upon application of light.

In some instances, polymerization of light curable lens molding materials has been carried out in stages using both light and heat. For example, U.S. Patent No. 4,818,801 describes the use of ultraviolet irradiation which is followed by heat in order to complete the polymerization. Heat is used to increase the kinetic energy of residual free-radicals in an attempt to ensure that most of the free-radicals will react so that the molding material is cured as much as feasible.

US-A-4,620,954 discloses producing a contact lens hydrogel by polymerization of a composition containing both a photoinitiator and a thermal initiator in which the mixture in the mold is irradiated with ultra-violet light and then heated to complete polymerization.

When using certain lens mold assemblies, however, it has been found that simultaneous curing of all of the liquid material in the mold assembly is not desirable. For instance, some mold assemblies have a reservoir adjacent the mold cavity to provide either additional liquid material to the cavity as the curing material contracts or to provide space for excess material as the material expands, and the material in the reservoir should remain liquid to facilitate flow of the material as needed. Other types of mold assemblies have a sliding segment that moves during curing of the molding material to facilitate contact with the material as the latter expands or contracts, and it is preferred to cure the monomer in the mold cavity before the liquid material between the sliding surfaces has cured and hardened so that movement of the segment is not unduly hindered.

A mold assembly having a diaphragm for inhibiting polymerization of lens material in a reservoir is described in U.S. Patent US-A-4,113,224 but is somewhat unsatisfactory due to the cost of making and using the diaphragm. U.S. Patent US-A-4,166,088 describes a molding assembly having a convex lens to focus light toward the center of a mold cavity in a manner that is also not entirely satisfactory due to the difficulty in precisely controlling the polymerization reaction at outer edges or the cavity. Consequently, it would be desirable to provide a method for curing optical devices which is relatively inexpensive, and yet provides precise control of the polymerization reaction in selected locations of the mold assembly.

The present invention concerns a method of making an ocular device. The method comprises the steps of providing an ocular device mold assembly having a mold cavity, and communicating the cavity with a molding material reservoir chamber external of the cavity. Monomers are mixed with a photoinitiator and a thermal initiator to make a liquid molding material. The material is introduced into the cavity in sufficient quantity to enable a portion of the material to be located in the chamber. A source of radiation is activated in order to photopolymerize material in the cavity, and photopolymerization of material located externally of the cavity including material located in the chamber is inhibited while the source of radiation is activated in order to enable the material to flow between the chamber and the cavity as may be needed. Subsequently, the assembly is subjected to heat after material in the cavity has substantially polymerized but before material in the chamber has substantially polymerized in order to thermally polymerize material in the chamber.

By mixing the polymer with both a photoinitiator and a thermal initiator to make a molding material, precise sequential control of the polymerization reaction can be achieved in an efficient and inexpensive fashion during the process of making an ocular device. Molding material in the chamber remains substantially uncured so that a proper amount of material in the cavity can be maintained. If the mold assembly includes surfaces which slide as the material in the cavity is cured, material on the sliding surfaces tends to remain liquid and lubricate the surfaces. Once the material in the cavity has cured, heating the assembly to polymerize material in the chamber enables the assembly to be later opened and handled without contacting uncured material.
Further details of the invention are defined in the features of the claims.

### Brief Description of the Drawings

Fig. 1 is a fragmentary side cross-sectional view of a mold assembly constructed in accordance with the invention;
Fig. 2 is a reduced, side cross-sectional view of a sleeve of the assembly of Fig. 1, additionally showing a sprue connection for making the sleeve;
Fig. 3 is a reduced, side cross-sectional view of a first mold segment of the assembly shown in Fig. 1, additionally illustrating a sprue connection for making the segment;
Fig. 4 is a reduced, side cross-sectional view of a second mold segment of the assembly shown in Fig. 1, along with a sprue connection for molding the segment;
Fig. 5 is a reduced, cross-sectional view of the assembly shown in Fig. 1, except that mold material for making an ocular device has been placed in the assembly and the second mold segment is shown in its initial stages of movement toward the first mold segment;
Fig. 6 is a view similar to Fig. 5 except that the second mold segment has moved to a certain position to define a mold cavity, and a source of radiation (shown schematically) has been activated to initiate curing of the mold material;
Fig. 7 is a reduced view somewhat similar to Fig. 6 except that the sleeve has been placed next to a holding jig, and an ejector is in contact with the first mold segment for pushing both the first mold segment and the second mold segment out of the sleeve in order to recover the cured product;
Fig. 8 is a fragmentary view of part of the assembly shown in Fig. 1 along with a closure mechanism for use when the assembly is used in a tracking mode; and
Fig. 9 is a view somewhat similar to Fig. 8 except that a different closure mechanism is shown which is useful when the assembly is used in a non-tracking mode.

### Detailed Description of the Preferred Embodiment

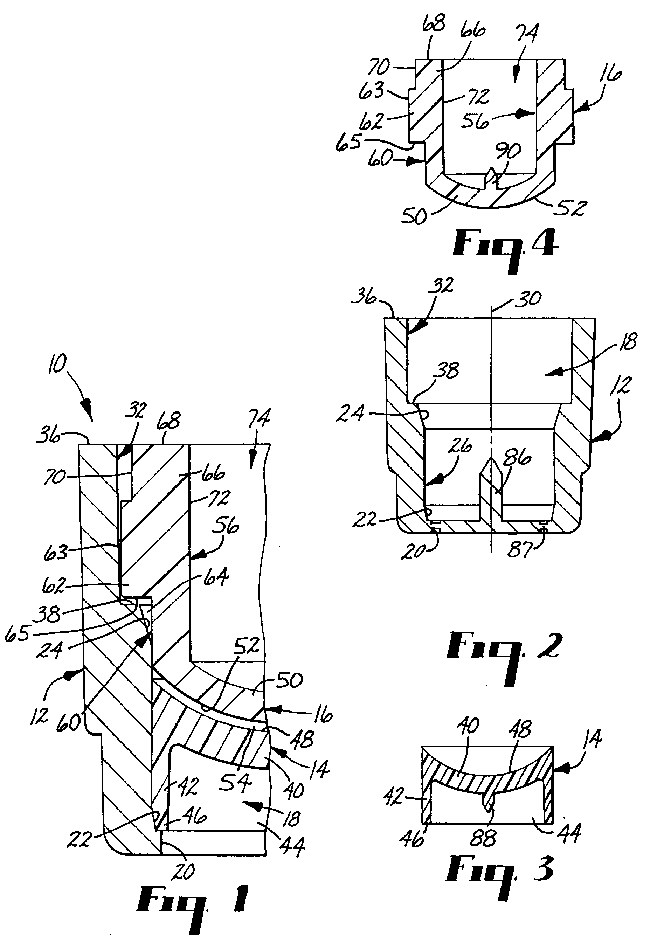

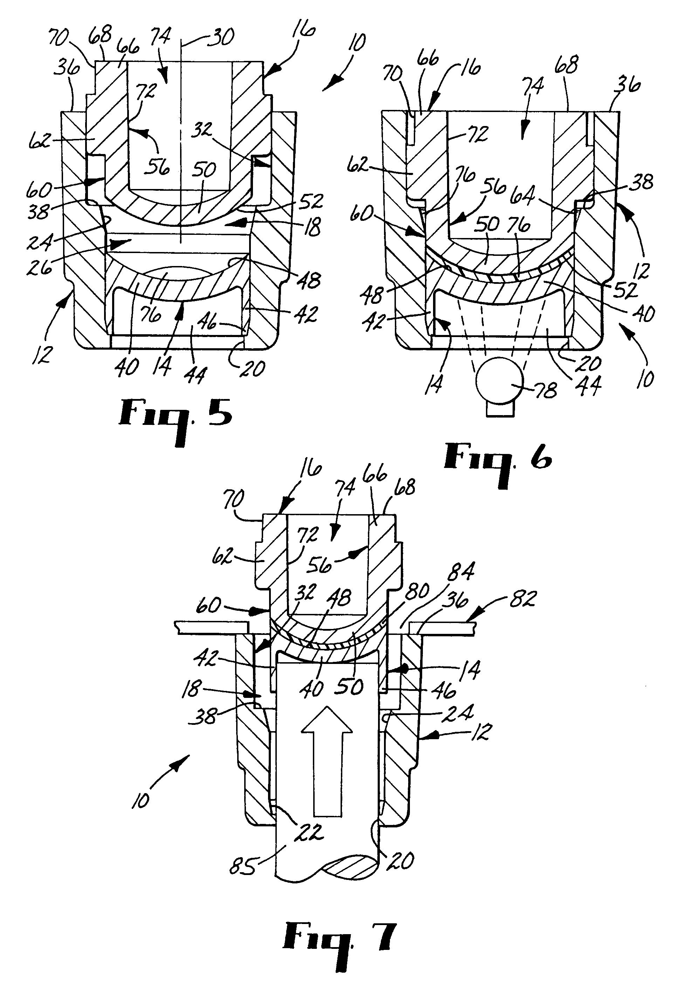

A mold assembly 10 for making an ocular device is shown in Figs. 1 and 5-7 and includes a sleeve 12, a first mold segment 14 and a second mold segment 16 that are shown individually in Figs. 2-4 respectively. The sleeve 12 has a central, elongated passage 18 which removably receives the segments 14, 16 to make the molded ocular device.

Referring now to Figs. 1 and 2, the sleeve 12 is generally cylindrical and includes an inwardly extending, ring-shaped flange 20 that is formed along the entire circumference of the passage 18. The sleeve 12 also has a first frustoconical surface 22 next to the passage 18 and positioned such that its smallest diameter is adjacent the flange 20. The sleeve 12 includes a second frustoconical surface 24 along with a cylindrical section 26 that interconnects the surfaces 22, 24. The cylindrical section 26 has a central longitudinal axis that coincides with a central longitudinal axis 30 of the passage 18.

The sleeve 12 has a frustoconical surface portion 32 next to the passage 18 and remote from the flange 20. The frustoconical portion 32 extends at a non-zero angle relative to the axis 30. The sleeve 12 also has an outer, flat, annular end 36 which extends in a plane perpendicular to the axis 30, along with a radially-extending shoulder 38 which integrally connects the frustoconical portion 32 to the second frustoconical surface 24.

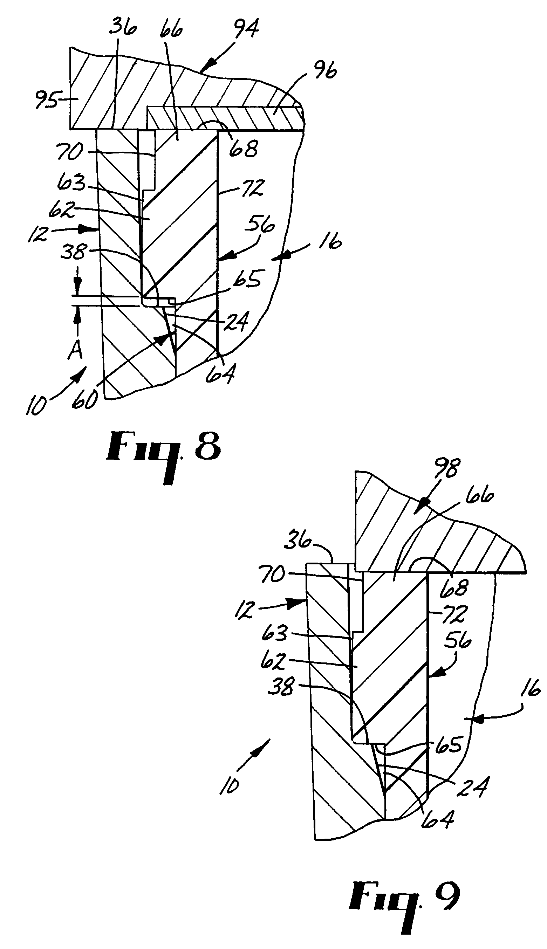

Turning now to Figs. 1 and 3, the first mold segment 14 has a window or base 40 that is integrally connected to a depending, cylindrical skirt 42 which is hollow to provide a central recess 44. Normally, an end portion 46 of the skirt 42 has an outer diameter equal to the outer diameter of the remainder of the skirt 42 as shown in Fig. 3. However, when the first mold segment 14 is received in the passage 18 as shown in Fig. 1, the end portion 46 is deflected slightly inwardly in a radial direction by the surface 22 and is in interference fit relationship (shown exaggerated) with the surface 22 to thereby establish a leak-resistant fluid seal remote from the base 40. In practice, the skirt 42 is in engagement with the sleeve 12 along its axial length and circumferential extent, but the most effective fluid seal is established next to the first frustoconical surface 22 due to the interference fit. The base 40 has a precisely curved face 48 for molding one side of an ocular device, and the length of the skirt 42 and resulting remoteness of the interference fit of the end portion 46 from the base 40 helps to avoid distortion of the contour of the face 48 when the first mold segment 14 is pulled into the passage 18 abutting the flange 20.

The second mold segment 16 (see Fig. 4) includes a central section 50 with a curved face 52 opposite the face 48 of the first mold segment 14. The second mold segment 16 is movable in the passage 18 to a certain position that is shown in Fig. 1 (as well as Fig. 6) spaced from the first mold segment 14 to define a mold cavity 54 that is bounded by a first side or face 52, a second side or face 48 and part of the cylindrical section 26 of the sleeve 12. The faces 48, 52 form opposite sides of an ocular device that is made from polymer lens molding material which is received and cured in the mold cavity 54.

The second mold segment 16 includes a tubular section 56 integrally connected with the central section 50. An outer cylindrical section 60 of the tubular section 56 has a central axis that coincides with the axis 30 when the second mold segment 16 is in the position shown in Fig. 1. The second mold segment 16 is circumscribed by an outwardly extending cylindrical portion 62 having an outer cylindrical wall 63 that has a larger diameter than the outer diameter of the cylindrical section 60. When the second mold segment 16 is in the position shown in Fig. 1, part of a lower, radially-extending, annular surface 65 of the cylindrical portion 62 and part of the cylindrical section 60 of the segment 16 along with the second frustoconical surface 24, the shoulder 38 and a lower part of the frustoconical portion 32 of the sleeve 12 combine to define a reservoir chamber 64 for excess material.

An outer end section 66 of the second mold segment 16 has an outermost, flat, annular end 68 which extends in a plane perpendicular to the central axis of the second mold segment 16. The outer end section 66 also includes an outwardly facing cylindrical surface 70 located between the end 68 and the cylindrical portion 62.

An inner wall 72 of the tubular section 56 faces a central recess 74 of the second mold segment 16. The wall 72 is frustoconical and preferably in the shape of a female zero Morse taper that is sized to fit a zero Morse taper pin which has been shortened from 5 cm to 2.5 cm. (A female zero Morse taper is made by using a finishing reamer having a flute length of 5.7 cm, a large end diameter of 9.3 mm and a small end diameter of 6.4 mm.)

Figs. 5-7 are exemplary of the steps undertaken in using the assembly 10 to make an ocular device. First, the first mold segment 14 is inserted in the sleeve 12 starting at the end 36 and is advanced along the passage 18 until the outer end of the end portion 46 contacts the upper surface of the flange 20. As the end portion 46 of the skirt 42 reaches the position shown in Fig. 5, the end portion 46 is deflected radially inwardly by the first frustoconical surface 22 (Figs. 1-2) in order to form an interference fit that (1) establishes a leak-resistant fluid seal, and (2) releasably locks the first mold segment 14 in place. Next, a measured quantity of liquid molding material 76 is placed on top of the face 48 as shown in Fig. 5.

The liquid molding material 76 is prepared by mixing monomers with a photoinitiator and a thermal initiator. Preferred monomers are described in U.S. Patent Nos. 4,818,801 and 4,440,918, both of which are assigned to the assignee of the present invention. A particularly preferred monomer is set out below in the section entitled "Monomer Preparation". Representative examples of thermally activated initiators and photoinitiators are also described in U.S. Patent Nos. 4,818,801 and 4,440,918. The material 76 is made by mixing 100 parts of monomer with 0.01 to 1.0 parts of thermal initiator and with 0.01 to 3.0 parts of photoinitiator. A particularly preferred molding material is made by mixing 100 parts of monomer with 0.05 to 0.3 parts of thermal initiator, and with 0.1 to 0.6 parts of photoinitiator.

The second mold segment 16 is then brought into position over the sleeve 12 and above the end 36 such that the central axis of the second mold segment 16 is in rough alignment with the longitudinal axis 30 of the passage 18. Next, the second mold segment 16 is advanced toward the first mold segment 14 and into the passage 18 whereupon, in all likelihood, the cylindrical portion 62 (see Figs. 1 and 4) of the segment 16 contacts one lateral side of the frustoconical portion 32 of the sleeve 12. As the second mold segment 16 continues to advance toward the first mold segment 14, the frustoconical portion 32 functions as an alignment means to shift the second mold segment 16 in a direction perpendicular to the axis 30 as may be necessary to precisely align the central axis of the second mold segment 16 with the axis 30 of the sleeve 12 as the second mold segment 16 continues to advance. By the time that the cylindrical section 60 of the second mold segment reaches the cylindrical section 26 of the sleeve 12, the longitudinal axis of the second mold segment 16 is precisely aligned with the axis 30. As such, the curved face 52 does not come into contact with the sleeve 12 such as the shoulder 38, and damage to the face 52 is largely avoided even in instances where the second mold segment 16 is initially unaligned with the axis 30. In this regard, the second frustoconical surface 24 is inclined at a greater angle relative to the axis 30 than the angle of inclination of the frustoconical portion 32 in order to avoid contact with the face 52.

Next, as the second mold segment 16 continues to move toward the first mold segment 14, the cylindrical sections 26, 60 telescopically engage each other and function as a guide means to prohibit shifting of the second mold segment 16 in a direction perpendicular to the axis 30. As the second mold segment 16 moves to the certain position that is shown in Fig. 6 (also shown in Fig. 8), the material 76 is spread throughout the cavity 54, and a portion of the material 76 moves along the sliding cylindrical sections 26, 60 (which are in communication with the cavity 54) in order to lubricate the latter. Excess material is displaced to the reservoir chamber 64.

Next, a light source 78 shown schematically in Fig. 6 is activated to begin curing of the material 76. The photoinitiator of the material 76 is effective at the wavelength of the light source 78. As the material 76 cures, the material 76 may shrink or expand; however, the lubricated cylindrical sections 26, 60 permit the second mold segment 16 to track such expansion or contraction in a manner that facilitates full contact of the faces 48, 52 with the material 76 at all times so that the surface of the curing material 76 accurately replicates the faces 48, 52. The axial length of sliding contact of the cylindrical sections 26, 60 need only be about 100 microns before the segment 16 reaches the certain position shown in Figs. 6 and 8.

Preferably, the frustoconical portion 32 is inclined at a taper of 0.25 degrees per side relative to the axis 30. The inclination permits air to escape without undue hindrance as the segment 16 advances. Additionally, the cylindrical wall 63 is sized to present a radial clearance of 0.005 mm with the frustoconical portion 32 when the second mold segment 16 is in its lowest expected position (such as that shown in Figs. 6 and 8), in order to provide a gross containment or restriction between the reservoir chamber 64 and the atmosphere external of the assembly 10. The restriction permits air to be vented to the atmosphere, but generally prevents escape of material 76. As this restriction is established, advancement of the segment 16 creates a slight back pressure on the material 76 and encourages the latter to remain in the cavity 54. However, the clearance between the cylindrical wall 63 and the frustoconical portion 32 is sufficient to prevent undue resistance to tracking movement of the cylindrical sections 26, 60 as the material 76 cures.

The use of a three-piece assembly permits the sleeve 12, the first mold segment 14 and the second mold segment 16 to be molded from different plastic materials. The sleeve 12, the first mold segment 14 and the second mold segment 16 are molded from plastic materials which are selected to provide the base 40 with an overall light transmittance value that is greater than the light transmittance value of the sleeve 12 and the second mold segment 16. As a result, photoinitiation of the material 76 generally occurs only in the mold cavity 54, while material in the reservoir chamber 64 and between the interengaged cylindrical sections 26, 60 remains substantially uncured and in a liquid state so as to avoid hindering movement of the second mold segment 16 and provide, if necessary, a source of additional liquid material to the cavity 54. In practice, the second mold segment 16 and the sleeve 12 are opaque, while the first mold segment 14 including the base 40 are translucent in order to admit light to the cavity 54. The lower surface of the base 40 (viewing Figs. 1 and 3) may be flat to facilitate curing of the material 76 from the center of the cavity 54 and then outwardly in a radial direction.

The light source 78 (350-365 nanometers, 300-1700 microwatts) is activated for a time period in the range of about 10 minutes to 2 hours, at which time the material 76 in the cavity 54 has substantially polymerized. The light source 78 is then deactivated, and the assembly 10 is subsequently placed in an oven (not shown) at a temperature in the range of about 80°C to 90°C for about 30 minutes to 10 hours. As the assembly 10 is heated, the flash (i.e., the material in the chamber 64 along with material adjacent the cylindrical surfaces 26, 60) is thermally initiated and polymerized, while the ocular device 80 (see Fig. 7) is postcured and/or annealed. As a result, the assembly 10 can then be taken apart to access the ocular device 80 (see Fig. 7) without contacting a significant quantity, if any, of uncured liquid material 76.

The assembly 10 is then placed against a jig 82 such that the end 36 of the sleeve 12 contacts edge portions of the jig 82 surrounding an orifice 84. Next, a cylindrical ejector 85 is guided through the flange 20 and into the recess 44 of the skirt 42, and contacts the bottom of the base 40. Continued movement of the ejector 85 in the direction shown in the arrow in Fig. 7 moves the first and second mold segments 14, 16 out of the passage 18, whereupon the ocular device 80 can be recovered. A chuck, tightened around the skirt 42, will loosen the segment 14 from the device 80 while enabling the device 80 to remain attached to the segment 16.

The three-piece mold assembly 10 also permits the selection of particular plastic materials for the segments 14, 16 which have a greater or lesser affinity as desired for the cured mold material of the ocular device 80. For example, if the device 80 is a lens blank which is to be later lathed into the shape of a lens, it may be preferable to have the device 80 remain fixed to the second mold segment 16 and release from the first mold segment 14 as the segments 14, 16 are moved apart after removal from the sleeve 12, so that subsequent lathing can be carried out using the second mold segment 16 as a mount. In such a situation, the second mold segment 16 could be made of a material such as amorphous nylon, while the first mold segment 14 may be made of a material such as polymethylpentene.

The assembly 10 may be used in either a tracking mode or a non-tracking mode. When used in a tracking mode, clearance between the cylindrical section 26 and the cylindrical section 60 should range from -0.01 to +0.01 mm (per side). If desired, the end 68 of the second mold segment 16 may be used as a reference guide to determine the spacing between the faces 48, 52. As one example, the assembly 10 may be dimensioned such that the distance between the faces 48, 52 and thus the thickness of the ocular device 80 is a certain dimension when the end 68 is coplanar with the end 36. In Fig. 8, a closure mechanism 94 has a boss 95 that contacts the end 36. The mechanism also carries an adjustment plate 96 which bears against the end 68. The plate 96 is vertically adjustable relative to the boss 95 in order to vary the thickness of the device 80. When the molding material 76 comprises a perfluoroether monomer, the material 76 contracts during polymerization when the light source 78 is activated. To permit free tracking movement, the distance "A" in Fig. 8 should be equal to or greater than the shrinkage of the material 76 in a vertical direction (viewing Fig. 8) between the faces 48, 52.

When the assembly 10 is used in a non-tracking mode, the second mold segment 16 is held in a fixed position relative to the sleeve 12. In the non-tracking mode, the clearance between sections 26, 60 should range from 0.00 to 0.01 mm per side to permit the material 76 to flow as needed between the reservoir chamber 64 and the cavity 54, such that the material 76 remains in contact with the faces 48, 52 during curing. Fig. 9 shows a closure mechanism 98 that bears against the end 68 while the sleeve 12 is supported in a fixed position. The tubular section 56 is dimensioned to enable the surface 65 to seat against the shoulder 38 when spacing between the faces 48, 52 is equal to the desired thickness of the ocular device 80.

Figs. 2-4 illustrate preferred locations for various sprue connections used to make the assembly 10. Fig. 2 shows a sprue 86 and a disc-shaped diaphragm gate 87 coupled to an inner surface of the flange 20 of sleeve 12. Unlike other areas of the sleeve 12, the shape of the inner wall of the flange 20 is not critical and provides an ideal location for the gate 87.

Figs. 3 and 4 show sprues 88, 90 for making the first and second mold segments 14, 16 respectively. The position of the sprues 88, 90 and accompanying gates normally provides even distribution of the material during injection molding in order to provide accurate contours on the faces 48, 52 as well as on the critical side surfaces of the segments 14, 16. Additionally, the sprue 88 functions as a handle for pulling the first mold segment 14 into the sleeve 12 so that damaging contact with the face 48 can be avoided. Using this method, a pliers-like tool used for pulling the sprue 88 could include nippers for cutting the sprue 88 and accompanying gate subsequent to installation of the segment 14 in the sleeve 12.

If the ocular device 80 is a lens, it may be preferable to degate the segment 14 immediately after the segment 14 is molded, since the thickness of the sprue 88 might otherwise cause increased shrinkage in the center of the base 40 and thereby impair the lens optics as the segment 14 cools after molding. The degated segment 14 is drawn into the sleeve 12 by a pin such as the ejector 85 using a vacuum assist in order to seat the segment 14 against the flange 20 without contact with the contoured face 48.

### MONOMER PREPARATION

### Preparation of HOCH₂CF₂O(̵CF₂CF₂O)̵ₘ(̵CF₂O)̵ₙCF₂CH₂OH

A 3L 3-necked flask, equipped with stirrer, condenser and addition funnel was charged with 80 g ZnCl₂ and 850 cc tetrahydrofuran. After stirring to effect solution, NaBH₄ (19 g.) was added and the mixture heated to reflux. The diester,

CH₃O₂CCF₂O(̵CF₂CF₂O)̵ₘ(̵CF₂O)̵ₙCF₂CO₂CH₃

m/n = 0.7, Molecular weight = 2000
was then added over a period of 1 hour. After refluxing for 16 hours, the reaction was cooled to room temperature and a solution of H₂O (1 cc) in tetrahydrofuran (10 cc) added over a period of 30 minutes. This was followed by the addition of 22 cc of a 50% H₂O/tetrahydrofuran solution over a period of 45 minutes. Hydrochloric acid (1 N, 1100 cc) was then added (35 minutes) and the mixture stirred until gas evolution ceased. The mixture was then transferred to a 4L separatory funnel and the lower phase separated and washed twice with 175 cc portions of H₂O. The product was then stirred under vacuum (1 Torr) for 16 hours at 40°. It was then filtered through a 4-8 micron sintered glass filter yielding 188 g of clear diol, equivalent weight 910.

A 250 ml bottle was charged with 222 g of this hydroxyl-terminated material, 32.0 g 2-isocyanatoethyl methacrylate, and 0.14 g dibutyltin dilaurate. The bottle was capped and shaken on a mechanical shaker for 20 hours, a mild exotherm being noted during the first hour. After shaking, an infrared spectrum taken of the cloudy reaction product indicated disappearance of isocyanate. The mixture was dissolved in 400 ml 1,1,2-trichloro-2,2,1-trifluoroethane ("FREON-113" brand solvent) and washed successively with three portions of 100 ml water each. The solvent was stripped from the washed material, the residue shaken in a separatory funnel with 500 ml of FC-75 (a perfluorinated cyclic ether available from 3M Company) and the lower layer periodically withdrawn over a period of two days until no further separation occurred. Removal of solvent from the upper layer yielded a clear oil (n_{D}²² 1.3337), identified by NMR as essentially pure telechelic perfluoropolyether urethane methacrylate having the formula 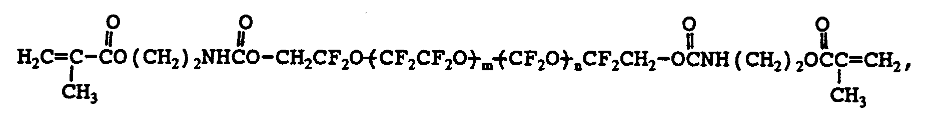
wherein m/n is about 0.7 and m is about 8.0. Removal of solvent from the lower layer yielded a cloudy oil (n_{D}²² 1.3230) identified by NMR as 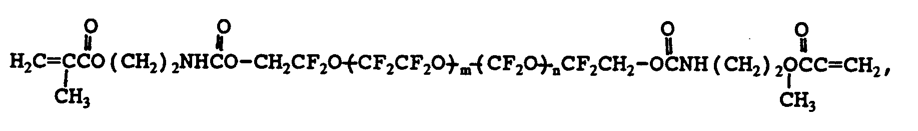
unreacted HOCH₂-CF₂O(̵C₂F₄O)̵ₘ(̵CF₂O)̵ₙCF₂-CH₂OH, and nonfunctional material having a perfluorooxyalkylene backbone.

### EXAMPLE 1

A monomer mixture of 8.25 g of the urethane methacrylate described in the preceding section entitled "Monomer Preparation", 0.75 g N-vinyl-2-pyrrolidone, 1.0 g methyl methacrylate, 0.025 g 2-hydroxy-2-methyl-1-phenyl-1-propanone (commerically known as "DAROCUR 1173" brand photoinitiator from EM Industries, Inc., Hawthorne, NY), and 0.02 g 1,1-dimethyl-3-hydroxybutyl peroxy-2-ethylhexanoate (commercially available as "LUPERSOL 665T50" brand thermal initiator from Pennwalt Chemicals, Buffalo, NY), is deoxygenated by mixing the monomers together in a flask, immersing the flask in liquid nitrogen and then evacuating the flask at a pressure of 1 Torr for 5 minutes. The flask is then sealed and allowed to warm to room temperature. This freeze/evacuate/thaw procedure is performed three times. The flask is then transferred to a nitrogen filled glove bag and a portion of the contents are charged by means of a syringe into a light transmissive mold which is preconditioned for 12 hours in nitrogen. The contents of the mold cavities are photoinitiated for 1 hour at ambient temperature (24°C). The molds are placed in an oven where the lens are annealed and/or postcured for two hours at 80°C and the flash which is shielded from the light source (by an opaque, upper mold segment and sleeve similar to segment 16 and sleeve 12) is thermally cured.

### EXAMPLE 2

A monomer mixture of 6.5 g of the urethane methacrylate described in the preceding section entitled "Monomer Preparation", 3.0 g hydroxyethyl methacrylate, 0.5 g ethylene glycol dimethacrylate, 0.03 g 2-hydroxy-2-methyl-1-phenyl-1-propanone (commercially known as "DAROCUR 1173" brand photoinitiator from EM Industries, Inc., Hawthorne, NY), and 0.02 g 1,1-dimethyl-3-hydroxybutyl peroxy-2-ethylhexanoate (commercially available as "LUPERSOL 665T50" brand thermal initiator from Pennwalt Chemicals, Buffalo, NY), was deoxygenated as described in Example 1. The flask was then transferred to a nitrogen filled glove bag and a portion of the contents was charged by means of a syringe into a light transmissive mold which was preconditioned for 12 hours in nitrogen. The contents of the mold cavities were photoinitiated for 1 hour at ambient temperature (24°C). The molds were placed in an oven where the lens were annealed and/or postcured for two hours at 80°C and the flash which was shielded from the light source (by an opaque, upper mold segment and sleeve similar to segment 16 and sleeve 12) was thermally cured.

## Claims

1. A method of making an ocular device comprising the steps of:
providing an ocular device mold assembly (10) having a mold cavity (54);
communicating said cavity with a molding material reservoir chamber (64) external of said cavity;
mixing monomers with a photoinitiator and a thermal initiator to make a liquid molding material;
introducing said material into said cavity in sufficient quantity to enable a portion of said material to be located in said chamber;
activating a source of radiation in order to photopolymerize material in said cavity;
inhibiting photopolymerization of material located externally of the cavity including material located in said chamber while said source of radiation is activated in order to enable said material to flow between said chamber and said cavity as may be needed; and subsequently
subjecting said assembly to heat after material in said cavity has substantially polymerized but before material in said chamber has substantially polymerized in order to thermally initiate and thereby thermally polymerize material in said chamber.

2. The method of claim 1, wherein said step of activating a source of radiation includes the step of passing radiation toward said material through a recess (4) in said assembly next to said cavity (54).

3. The method of claim 2, wherein said cavity has a first side (52) located next to said chamber (64), and a second side (48) opposite said first side, and said step of passing radiation is carried out by passing radiation through said second side (48).

4. The method of claim 1, wherein said assembly (10) includes a movable segment (16) having a slidable surface (60) adjacent said chamber, and wherein said step of inhibiting photopolymerization of material located in said chamber includes the step of inhibiting photopolymerization of material next to said slidable surface.

5. The method of claim 1, wherein said assembly includes a first mold segment (14) and a second mold segment (16), wherein said mold cavity (54) is located between said first mold segment and said second mold segment, wherein said second mold segment has a certain light transmittance value, and wherein said step of inhibiting photopolymerization of material located in said chamber is carried out by providing said first mold segment with a greater overall light transmittance value than said overall light transmittance of said second mold segment.

6. The method of claim 1, wherein said step of providing an ocular device mold assembly includes the step of providing a first mold segment (14), a second mold segment (16) and a sleeve (12) surrounding said first mold segment and said second mold segment, wherein said mold cavity (54) is located between said first mold segment and said second mold segment, and wherein said step of inhibiting photopolymerization of material located in said chamber is carried out by making at least one of said segments or said sleeve of an opaque material.

7. The method of claim 1 wherein said assembly includes a first mold segment (14) and a second mold segment (16), wherein said mold cavity is located between said first mold segment and said second mold segment, and including the step of moving said second mold segment of the assembly relative to said first mold segment of the assembly during photopolymerization of material in said cavity.

8. The method of claim 7, wherein said second mold segment includes a slidable surface (60), and said step of moving said second mold segment includes the step of contacting a portion of said material with said slidable surface.

9. The method of claim 1; and including the step of thermally post-curing the material in said cavity during said step of subjecting said assembly to heat.

## Patentansprüche

1. Verfahren zum Herstellen einer Sehhilfe mit folgenden Schritten:
es wird eine Sehhilfen-Formanordnung (10) mit einem Formhohlraum (54) verwendet;
der genannte Hohlraum wird mit einer außerhalb des Hohlraums befindlichen Aufnahmekammer (64) für Formmasse in Verbindung gebracht;
zum Herstellen einer flüssigen Formmasse werden Monomere mit einem Photoinitiator und einem Thermoinitiator gemischt;
die genannte Masse wird in einer solchen Menge in den genannten Hohlraum eingeleitet, daß ein Teil der genannten Masse in die genannte Kammer gelangen kann;
zum Photopolymerisieren von Masse in dem genannten Hohlraum wird eine Strahlungsquelle aktiviert;
bei aktivierter Strahlungsquelle wird eine Photopolymerisation von außerhalb des Hohlraums befindlicher Masse einschließlich von in der genannten Kammer befindlichen Masse, inhibiert, so daß die Masse nach Bedarf zwischen der Kammer und dem Hohlraum fließen kann, und danach
wird nach dem Polymerisieren von Masse in dem Hohlraum, aber vor einem beträchtlichen Polymerisieren von Masse in der Kammer, der Anordnung Wärme zugeführt, um eine Thermoinitierung und infolgedessen eine Thermopolymerisation von Masse in der Kammer zu bewirken.

2. Verfahren nach Anspruch 1, in dem zum Aktivieren einer Strahlungsquelle Strahlung durch eine in der Anordnung dem Hohlraum (54) zunächst vorgesehene Vertiefung (4) zu der genannten Masse hingeführt wird.

3. Verfahren nach Anspruch 2, in dem der Hohlraum eine der Kammer (64) zunächst angeordnete erste Seite (52) besitzt sowie eine der ersten Seite entgegengesetzte zweite Seite (48) und zum Zuführen von Strahlung diese durch die zweite Seite (48) hindurchgeführt wird.

4. Verfahren nach Anspruch 1, in dem die genannte Anordnung (10) ein bewegbares Segment (16) mit einer der genannten Kammer benachbarten Gleitfläche (60) besitzt und beim Inhibieren einer Photopolymerisation von Masse in der Kammer eine Photopolymerisation von Masse zunächst der Gleitfläche inhibiert wird.

5. Verfahren nach Anspruch 1, in dem die genannte Anordnung ein erstes Formsegment (14) und ein zweites Formsegment (16) aufweist, der Formhohlraum (54) sich zwischen dem ersten und dem zweiten Formsegment befindet, das zweite Formsegment einen bestimmten Durchlaßgrad hat und zum Inhibieren der Photopolymerisation von in der genannten Kammer befindlicher Masse das erste Formsegment mit einem höheren Gesamt-Durchlaßgrad ausgeführt wird als das zweite Formsegment.

6. Verfahren nach Anspruch 1, in dem zum Schaffen einer Sehhilfen-Formanordnung ein erstes Formsegment (14), ein zweites Formsegment (16) und eine das erste und das zweite Formsegment umgebende Hülse (12) verwendet werden, der Formhohlraum (54) sich zwischen dem ersten und dem zweiten Formsegment befindet, das zweite Formsegment einen bestimmten Durchlaßgrad hat und zum Inhibieren der Photopolymerisation von in der genannten Kammer befindlichen Masse mindestens eines der Segmente oder die Hülse aus einem opaken Werkstoff hergestellt wird.

7. Verfahren nach Anspruch 1, in dem die genannte Anordnung ein erstes Formsegment (14) und ein zweites Formsegment (16) aufweist, der Formhohlraum (54) sich zwischen dem ersten und dem zweiten Formsegment befindet, das zweite Formsegment einen bestimmten Durchlaßgrad hat und in einem weiteren Schritt während der Photopolymerisation von Masse in dem Hohlraum das zweite Formsegment der Anordnung relativ zu dem ersten Formsegment der Anordnung bewegt wird.

8. Verfahren nach Anspruch 7, in dem das zweite Formsegment eine Gleitfläche (60) besitzt und in dem genannten Schritt zum Bewegen des zweiten Formsegments ein Teil der genannten Masse mit der Gleitfläche in Berührung gebracht wird.

9. Verfahren nach Anspruch 1, in dem während der Zuführung von Wärme zu der Anordnung die Masse in dem Hohlraum thermisch nachgehärtet wird.

## Revendications

1. Procédé de fabrication d'un objet oculaire, comprenant les opérations suivantes :
préparer un ensemble de moule pour objet oculaire (10) ayant une cavité de moule (54);
mettre ladite cavité en communication avec une chambre-réservoir pour matériau de moulage (64), à l'extérieur de ladite cavité;
mélanger les monomères avec un photo-initiateur et un initiateur thermique pour préparer un matériau de moulage liquide;
introduire ledit matériau dans ladite cavité en quantité suffisante pour permettre qu'une partie dudit matériau soit située dans ladite chambre;
activer une source de rayonnement afin de photopolymériser le matériau dans ladite cavité;
inhiber la photopolymérisation du matériau situé à l'extérieur de la cavité , y compris le matériau situé dans ladite chambre lorsque ladite source de rayonnement est activée, afin de permettre que ledit matériau s'écoule entre ladite chambre de ladite cavité suivant les besoins; et, ultérieurement
soumettre ledit ensemble à la chaleur après que le matériau dans ladite cavité a été essentiellemnt polymérisé mais avant que le matériau dans ladite chambre ait été essentiellement polymérisé, afin d'initier thermiquement et donc de polymériser thermiquement le matériau dans ladite chambre.

2. Procédé selon la revendication 1, dans lequel ladite opération d'activation d'une source de rayonnement comprend l'opération de faire passer le rayonnement à travers ledit matériau en passant par un redan (4) dans ledit ensemble proche de ladite cavité (54).

3. Procédé selon la revendication 2, dans lequel ladite cavité a un premier côté (52) situé à proximité de ladite chambre (64) et un deuxième côté (48) opposé audit premier côté, et dans lequel ladite opération consistant à faire passer le rayonnement est effectuée en faisant passer le rayonnement par ledit deuxième côté (48).

4. Procédé selon la revendication 1, dans lequel ledit ensemble (10) comprend un segment mobile (16) ayant une surface coulissante (60) proche de ladite chambre et dans lequel ladite opération d'inhibition de la photopolymérisation du matériau situé dans ladite chambre comprend l'opération d'inhibition de la photopolymérisation du matériau proche de ladite surface coulissante.

5. Procédé selon la revendication 1, dans lequel ledit ensemble comprend un premier segment de moule (14) et un deuxième segment de moule (16), dans lequel ladite cavité de moule (54) est située entre ledit premier segment de moule et ledit deuxième segment de moule, dans lequel ledit deuxième segment de moule a une certaine valeur de la transmission de la lumière et dans lequel ladite opération d'inhibition de la photopolymérisation du matériau situé dans ladite chambre est effectuée en conférant audit premier segment de moule une transmission globale de la lumière supérieure à la transmission globale de la lumière dudit deuxième segment de moule.

6. Procédé selon la revendication 1, dans lequel ladite opération consistant à disposer un segment de moule pour objet oculaire comprend l'opération qui consiste à disposer un premier segment de moule (14), un deuxième segment de moule (16) et un manchon (12) entourant ledit premier segment de moule et ledit deuxième segment de moule, dans lequel ladite cavité de moule (54) est située entre ledit premier segment de moule et ledit deuxième segment de moule, et dans lequel ladite opération d'inhibition de la photopolymérisation du matériau situé dans ladite chambre est effectuée en constituant au moins lesdits segments ou ledit manchon d'un matériau opaque.

7. Procédé selon la revendication 1, dans lequel ledit ensemble comprend un premier segment de moule (14) et un deuxième segment de moule (16), dans lequel ladite cavité de moule est située entre ledit premier segment de moule et ledit deuxième segment de moule, et comprend l'opération consistant à déplacer ledit deuxième segment de moule de l'ensemble par rapport audit premier segment de moule de l'ensemble pendant la polymérisation du matériau dans ladite cavité.

8. Procédé selon la revendication 7, dans lequel ledit deuxième segment de moule comprend une surface coulissante (60), et ladite opération de déplacement dudit deuxième segment de moule comprend l'opération consistant à mettre en contact une partie dudit matériau avec ladite surface coulissante.

9. Procédé selon la revendication 1 et comprenant l'opération consistant à postpolymériser thermiquement le matériau dans ladite cavité pendant ladite opération qui consiste à soumettre ledit ensemble à la chaleur.
